# EUROPEAN PATENT SPECIFICATION

(11) **EP 1 669 658 B1**
(45) Date of publication and mention of the grant of the patent: **26.03.2008**
(21) Application number: 05027131.1
(22) Date of filing: 12.12.2005
(51) Int. Cl.: F16L 41/08, F16L 5/10

(54) **Connection sleeve for pipe branches**
Verbindungshülse für Rohrabzweige
Manchon de raccord pour conduites de branchement

(30) Priority: 13.12.2004 DK 200401920
(43) Date of publication of application: 14.06.2006
(73) Proprietor: NAL Products ApS, 6818 Arre (DK)
(72) Inventor: Lauridsen, Niels Arne, 6818 Årre (DK)
(74) Representative: Tellefsen, Jens J.

(56) References cited:
- WO-A-02/103234
- DE-A1- 19 817 638
- DE-U1- 20 016 604
- DE-U1- 29 918 122

## Description

### Background of the Invention

The present invention relates to a drill sleeve, in the following referred to as "a sleeve" for connecting pipe branches to pipes and wells and for sealing the joints between the parts, and of uses of such a sleeve. Such sleeves are typically applied to connections between a branch pipe in pipes and wells of double-walled construction, particularly including pipes and wells made from plastic but also for relatively thick-walled concrete walls and pipes. The branch pipe or the inlet is usually made from rubber or plastic.

The invention also relates to a collar, for example used in connection with a sleeve as mentioned above.

When an inlet or a branch pipe from a main is to be mounted, this is usually performed by cutting a circular hole in the surface of the pipe. Pipelines and wells of this type which are included in the present invention typically have a round or oval cross section. At the place where an inlet or branch pipe is desired, a hole is drilled in the pipeline with a round drill. Hereafter, a sleeve is mounted either around or in the hole itself, thereby making a connection for the subsequent mounting and fastening of an inlet or the like to the main.

The hole drilled in the pipeline or the well has a diameter substantially corresponding to an outer diameter of the sleeve, whereby the sleeve when mounted in the main pipeline has an inner diameter corresponding to the pipe diameter it is desired to fit in the inlet or in the branch pipe. Standard pipes are typically applied, i.e. pipes which can be ordered with fixed diameters with intervals depending on the user's wishes. Normally these are stocked commodities. The sleeves according to the invention are possibly made as stocked commodities in sizes that suit the pipes one could expect the user to apply for inlets and branch pipes.

The hole in the pipeline or well into which the branch pipe or inlet is to be arranged is typically provided by a circular drill having a diameter corresponding to the outside diameter of the body of the sleeve but less than external flanges on the sleeve. When the drill is applied perpendicular to the pipe's longitudinal axis, a slightly oval hole is obtained. When the sleeve therefore is mounted in the hole, it will either be too small in one direction or too large in the other, depending on the size of the diameter chosen for the drilling of the hole.

WO 02/103234 discloses a sleeve intended to compensate for the slightly oval shape in the connecting hole in the pipe. It comprises a tubular body with an inner side and an outer side, where a first end of the sleeve is designed for inserting into a hole in a wall, and where the second end of the sleeve is designed for disposition at the surface of the hole, and where the outer side of the first end of the sleeve is provided with an annular projection. The invention concerns such a sleeve.

The prior art sleeve according to WO 02/103234 is provided at the first end of the sleeve with an annular reduction of the inner diameter so as to form an inner flange perpendicularly to the tubular side of the sleeve at the first end. After mounting the sleeve in the drilled hole, an end of the branch pipe is put into the sleeve, and the leading end of the branch pipe eventually catches the flange at the first end, thus stopping the movement of the pipe. This prior art has the disadvantage that sometimes the branch pipe is pushed too far into the hole, carrying the sleeve with it. Consequently, the branch pipe end and the first end of the sleeve protrude into the bore of the main pipe, causing obstruction and accumulation of the matter flowing in the main pipe. Sometimes leakages may occur in case of a double-walled main pipe because tightness will be missing at the point where the first end of the sleeve should bear against the rather thin inner wall of the main pipe.

In DE 20016604, another prior art sleeve is disclosed. This sleeve is inserted through a hole in the pipe from which it is desirable to branch off. The sleeve is inserted into the hole until an outer flange of the sleeve comes into contact with the pipe. The sleeve is on the outside provided with teeth which, due to the compression between the perimeter of the hole and the pipe inserted into the sleeve, maintains the sleeve in position. On the inside, the sleeve is provided with one or more lips which will seal against the branch pipe to be inserted into the sleeve.

This sleeve needs to have a length corresponding to the wall thickness of the pipe from which it is desirable to branch off. If the sleeve is too long, it will project into the main pipe and possibly hinder the free flow of liquid in the main pipe. If it is too short, it may not be sufficiently fastened to the main pipe. Also, no provisions are suggested for thin walled main pipes, for which purpose the sleeve is not suitable.

### Explanation of the Invention

In order to overcome the disadvantages of the prior art, the invention provides for a connection sleeve as described in the introduction which is peculiar in that the projection on the outer side of the first end of the sleeve is shaped as an annular lip having largely constant thickness and projecting obliquely towards the second end of the sleeve.

In this configuration, the annular lip will resiliently yield when pushing the sleeve through a hole, and when the first end appears at the inside of the hole, the lip will spread out and act as a retainer means. The retainer means provided in this way will not have great strength but sufficiently enough to make the user feel when the lip engages the inside of the main pipe wall adjacent to the hole and thus stop pulling the sleeve back. In that way, the first end of the sleeve can be positioned accurately and approximately flush with the inner side of the main pipe wall and the problem of having the first end of the sleeve and the leading end of the branch pipe protruding into the interior of the main pipe is avoided. Also, the inventive design of the annular lip is so flexible that the sleeve may be used when fitting branch pipes or inlets in thick concrete walls having a dimension greater than the length of the sleeve. In this case, the annular lip at the first end will just fold up between the outer side of the sleeve and the inner side of the hole in the concrete wall and thus increase the sealing pressure, thereby providing a favourable effect.

In order to increase the sealing pressure at the first end of the sleeve, it is preferred that the inner side at the first end of the sleeve is provided with an annular reduction of the inner diameter, and wherein the annular reduction of the inner diameter is designed as an inwards bevelling which originates from a largely cylindrical part of the inner side and narrows to a smaller diameter at the edge of the first end of the sleeve. When a branch pipe is forced through the bore at the first end of the sleeve, the diameter reduction causes distending of the sleeve thereby increasing sealing pressure against the surrounding hole.

For attaining a sealing contact between the annular reduction of the inner diameter at the first end of the sleeve, it is preferred that the inwards bevelling on the innermost part has a cross-sectional shape as a tapering lip. The lip will be more yielding to the distending action of the branch pipe, thus easing mounting and making the sealing more resilient.

In a further embodiment of the invention, the sleeve is peculiar in that the outer side of the sleeve is provided with an annular flange at the second end, the flange projecting largely perpendicularly out from the tubular outer side, and wherein the outer side of the sleeve is provided with an annular bead which is disposed at a distance of x where 2 ≤ x ≤ 40 mm, more preferred 10 ≤ x ≤ 30 mm, or still more preferred 12 ≤ x ≤ 18 mm from the flange. A strapping band may then be placed between the annular flange and the annular bead for securing the second end of the sleeve onto the circumference of the branch pipe. Apart from the sleeve now being fixed with no risk of sliding along the branch pipe, a secure sealing between the inner side of the sleeve and the branch pipe is also achieved. Also, by dimensioning the length of the sleeve to certain standard double-walled main pipes, the bead will appear right at the outer side of the main pipe and thus it is indicated to the user how far into the hole in the wall the sleeve is to be pushed when mounting it on the main pipe.

The connection sleeve according to the invention may be applied in a new and inventive use for sealing the connection between a branch pipe and a lateral hole in a double-walled main pipe of corrugated plastic, where the second end of the connection sleeve is mounted to project out from the outer side of the pipe while the connection sleeve is secured to the branch pipe by a strapping band disposed between the second end of the connection sleeve and the main pipe.

Also, the connection sleeve may be applied in a use for sealing the connection between an inlet pipe and a hole in a cylindrical concrete wall, the thickness of the concrete wall being as least as great as the length of the sleeve, where the second end of the connection sleeve is mounted to project out from the outer side of the cylindrical wall while the connection sleeve is secured to the inlet pipe by a strapping band disposed between the second end of the connection sleeve and the cylindrical wall.

The invention also relates to an accessory for use, for example, in combination with the connection sleeve mentioned above. In a number of situations, the ideal connection, i.e. connection where the branch pipe is at the exact correct angle and position in relation to the main pipe is seldom achieved. In reality, the pipes are often off-set or the angle between the two pipes is not exactly as it should be in order to fit inside the connection sleeve. For this purpose, an accessory in the shape of a collar is provided such that the collar will compensate for difference in angle or off-centreness.

The collar is in the shape of a truncated cone where the outside of the cone has a number of steps, for example comparable to steps on a pyramid. The truncated cone will thereby provide a different diameter on each step. This provides for a number of advantages. By selecting a larger connection sleeve in combination with the collar, it is possible to connect the branch pipe into the appropriate section in the collar by cutting off at predetermined places on the collar at the step where the relevant diameter is present. The branch pipe is thereafter inserted into the collar and optionally a strapping band in tightened around the collar and the branch pipe. In order to compensate for differences in angle or placement, the further steps of the collar will due to the flexibility of the material be able to allow the branch pipe a certain deviation from the optimum angle and off-centreness in relation to the collar mounted in the main pipe.

### The Drawing

Embodiments of the invention will now be described in further detail with reference to the accompanying drawings wherein:
- Fig. 1: is a cross-section of a first embodiment of the sleeve according to the invention;
- Fig. 2: shows a first application of the first embodiment of the sleeve according to fig. 1 when joining a branch pipe to a main pipe of double-walled, corrugated construction;
- Fig. 3: shows a second application of the first embodiment of the sleeve - in princi-ple the same as fig. 2 - but with a strapping band for securing the sleeve;
- Figs. 4 and 5: show second and third embodiments, respectively, of the sleeve according to the invention;
- Fig. 6: shows a third application of a fourth embodiment of the sleeve according to the invention in a hole of a concrete wall,
- Fig. 7: shows a collar for use with a sleeve or a pipe piece, and
- Fig. 8: shows a perspective view of a collar according to the invention.

### Description of Embodiment Examples

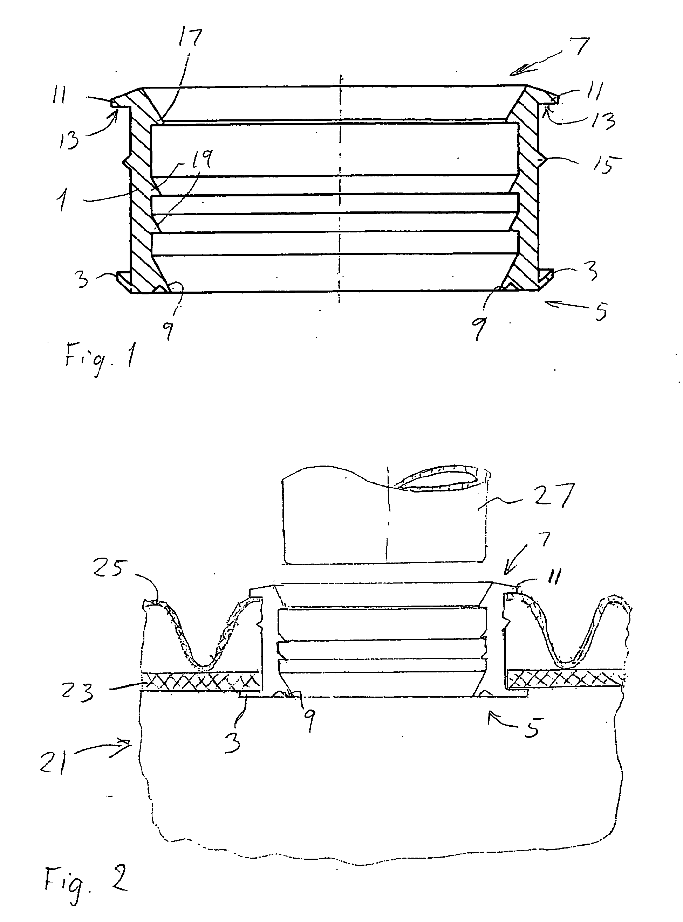

In a first embodiment of the sleeve according to the invention appearing on fig. 1, the sleeve has a largely tubular body 1 from which diverse flanges, lips and beads are projecting. The sleeve 1 is provided with an annular external lip 3 at its first end 5. The lip 3 has largely constant cross-section so as to be very flexible and projects away from the end 5 and obliquely up along the outer side of the body 1 of the sleeve and towards the second end 7 of the sleeve.

The first embodiment of the sleeve further includes an internal reduction of the diameter at the first end, configured as a tapering lip 9 which extends inwards and towards the first end 5. The internal reduction or lip 9 both serves as a sealing means towards an inserted branch pipe and as a compression means towards the edge or wall of a surrounding hole of a main pipe or a wall. The internal reduction of the diameter at the first end 5 does not need to be shaped as a lip in cross-section but may just be a solid inwards projection in another, not shown, embodiment.

At the second end 7 of the sleeve, which always will appear outside the wall or the main pipe in which the sleeve is mounted, there is an annular outwards projecting flange 11. The flange 11 extends perpendicularly from the body 1 of the sleeve on the side 13 facing the first end 5. The purpose of the flange 11 is to provide abutment for the underlying part being the external side of a pipe or for the side of a strapping band as described below.

Spaced apart from the flange 11, there is provided an annular bead 15 which may have a pointed cross-section as shown on fig. 1 or may be round in other not shown embodiments. The bead 15 is spaced about 15 millimetres from the side 13 in order to accommodate for a standard width strapping band between the flange 11 and the bead 15. The spacing between side 13 and bead 15 may be greater or lesser, e.g. between 12 and 18 mm. The bead 15 will assist the user visually when mounting the sleeve as described below.

In order to provide sufficient sealing at the second end 7, the sleeve is generally provided with an internal tapering flange 17 pointing inwards and towards the first end of the sleeve, a feature which is prior art. Furthermore, the sleeve may be provided with further lips or beads 19 internally for enhancing the sealing effect; these lips or beads 19 may be provided in any number or configurations.

Fig. 2 shows a main pipe 21 of double-walled construction with a smooth inner pipe 23 and a corrugated outer pipe 25. This kind of main pipe is typically used for a sewer conduit. The sleeve is put through a drilled hole inside the pipe 21 and mounted as shown on fig. 2. The lip 3 at the first end will then fold down slightly so as to contact the inner side of the inner pipe 23. In this way, the user can be assured that the sleeve is correctly mounted when feels the resistance from the lip 3 while pulling the sleeve back through the hole. Provided correct dimensioning of the sleeve to the thickness of the double wall 23, 25, the flange 11 at the second end will rest partly upon the outside corrugation 25. The branch pipe 27 may then be mounted in the sleeve.

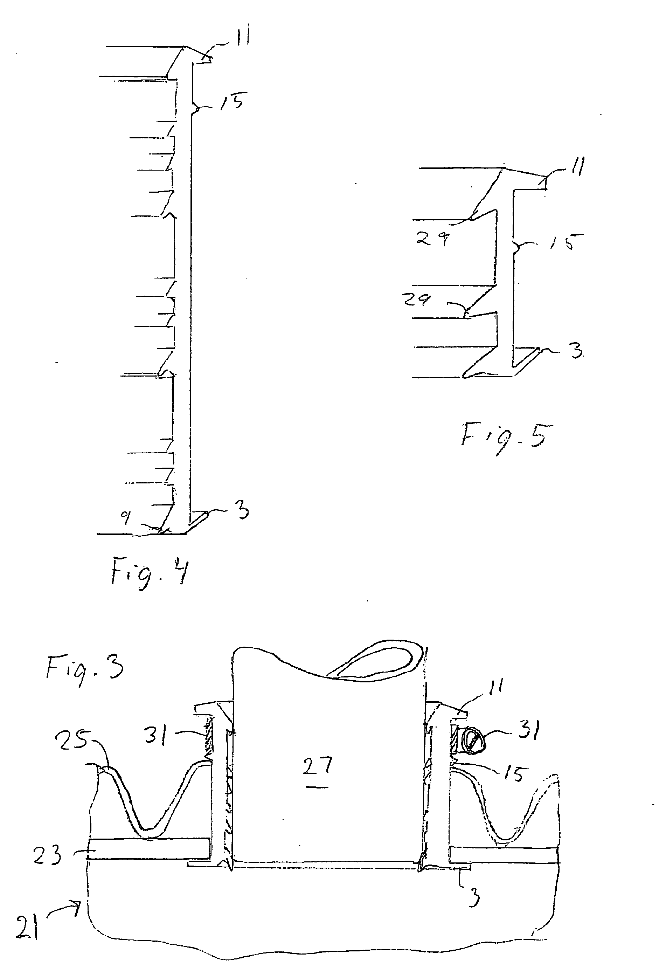

Fig. 3 also shows a first embodiment of the sleeve; here, though, the sleeve is relatively higher, or longer, in order to illustrate the application of a strapping band 31. Here, the sleeve is mounted so that the lip 3 engages the inner side of the inner pipe 23 while the bead 15 appears on top of the corrugation of the outer pipe 25. After fitting the branch pipe 27 in the sleeve as shown, the strapping band 31 is mounted between the flange 11 and the bead 15. In addition to good sealing effected by the strapping band 31 close to the second end of the sleeve, the strapping band 31 may also ensure that the branch pipe 27 cannot slide further into the main pipe 21. Thus, it is ensured that the leading end of branch pipe 27 will not project into the bore of the main pipe 21 and cause obstruction and accumulation of solid matter conducted in the pipe.

The second embodiment of the sleeve shown on fig. 4 is applicable to large and deep holes in thick walls. The embodiment shown on fig. 5 of the sleeve shows a design with larger internal lips 29 which is suited for branch pipes of more coarse construction.

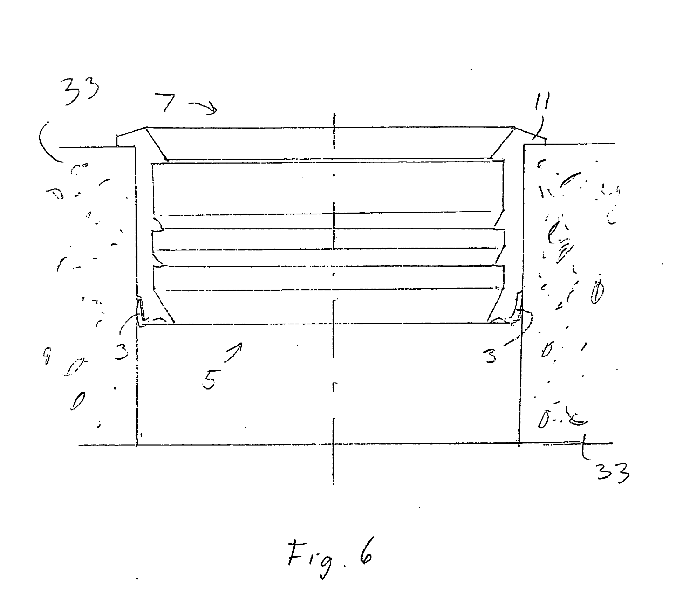

In a fourth embodiment of the sleeve according to the invention, the bead 15 may be omitted. This embodiment of the sleeve is shown on fig. 6 and used in a thick concrete wall where the dimension of the wall 33 is greater than the length of the sleeve. When mounting the sleeve, the lip 3 will be bent up along the inside of the hole in the wall 33 and thus form a further compression means when subsequently mounting the branch pipe (not shown). The flange 11 will then rest on the outer surface of the wall 33 and thus form a stop means for the sleeve. It is, however, to be mentioned that the first, second and third embodiments of the sleeve according to the invention may also be used in connection with such thick concrete walls 33 if the bead 15 does not prevent correct mounting and seeking of the branch pipe.

The use of the sleeve according to the invention may be combined in other ways. For example, the use of a strapping band 31 may be combined with mounting a branch pipe in a thick concrete wall as shown on fig. 6, and in that case the second end 7 of the sleeve will project out from the outer side of the wall while the lips 3 are folded up along the inner side of the hole in that wall 33.

The sleeve is made of a modified rubber material, for example SBR-rubber, EPDM-rubber, NPR-rubber or other rubber or elastomer-types.

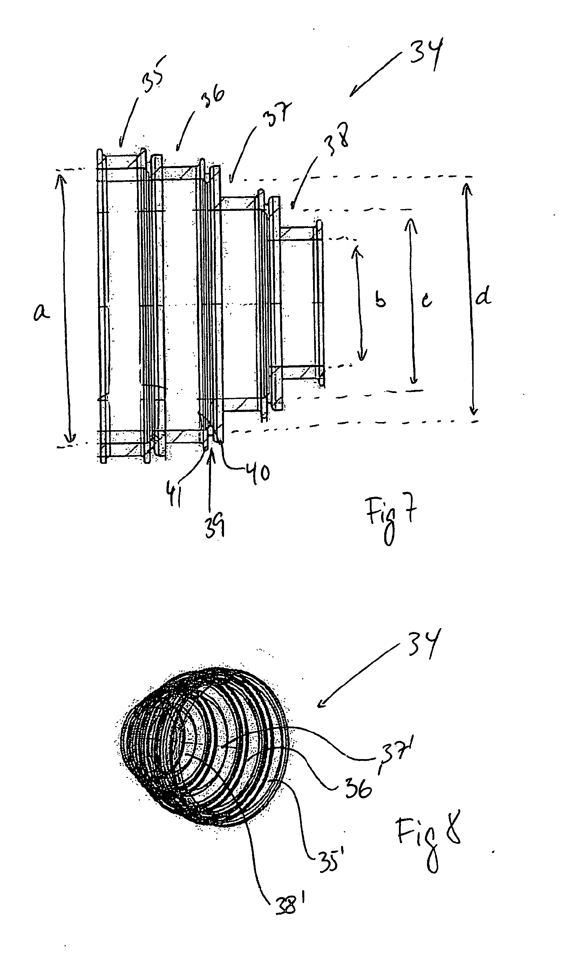

In fig. 7, the accessory in the shape of a collar 34 is illustrated. The collar has the shape of a truncated cone where a number of steps 35,36,37,38 are shaped. In this embodiment, four different steps are provided, but the collar 34 may be provided with any number of steps. Each step is separated by a cutting zone 39 which cutting zone is limited in both sides by a specially reinforced section 40,41. The particular collar is suitable for being fitted into a sleeve or a piece of pipe 27 fitted inside a sleeve according to the invention having an outer diameter of "a". The branch pipe may have any of the diameters "b", "c" or "d". By cutting the collar 34 in the appropriate cutting zone 39 such that the appropriate step is the step corresponding to the appropriate diameter of the branch pipe, the collar 34 is adaptable to, in this case, three different sizes of branch pipes, namely branch pipes having an outer diameter of "b", "c" or "d".

The width of each step 35,36,37,38 may advantageously be chosen to correspond to a strapping band such that after the collar has been cut in order to suit the appropriate branch pipe, a spanning strap may be arranged in the step such that the zones 40,41 limit and thereby keep the strapping band in place on the appropriate step.

In fig. 8, a perspective view of a collar 34 according to the invention is illustrated, depicted such that the steps of the collar may be seen from the inside. The steps are indicated by the reference numbers of fig. 7 added with an apostrophe.

## Claims

1. A connection sleeve for a pipe branch, comprising a substantially tubular body (1) with an inner side and an outer side, where a first end of the sleeve is designed for inserting into a hole in a wall, and where the second end of the sleeve is designed for disposition at the surface of the hole, and where the outer side of the first end (5) of the sleeve is provided with an annular projection shaped as an annular lip (3) having largely constant thickness and projecting obliquely towards the second end (7) if the sleeve, and where the inner side at the first end of the sleeve is provided with an annular reduction of the inner diameter, where the annular reduction (9) of the inner diameter is designed as an inwards bevelling which originates from a largely cylindrical part of the inner side and narrows to a smaller diameter at the edge of the first end (5) of the sleeve.

2. A connection sleeve according to claim 1, wherein the inwards bevelling (9) on the innermost part has a cross-sectional shape as a tapering lip.

3. A connection sleeve according to claim 1 or 2, wherein the outer side of the sleeve is provided with an annular flange (11) at the second end (7), the flange projecting largely perpendicularly out from the tubular outer side, and wherein the outer side of the sleeve is provided with an annular bead (15) which is disposed at a distance of x where 2 ≤ x ≤ 40 mm, more preferred 10 ≤ x ≤ 30 mm or still more preferred 12 ≤ x ≤ 18 mm from the flange.

4. Use of a connection sleeve according to claim 1 for sealing the connection between a branch pipe and a lateral hole in a double-walled main pipe of corrugated plastic, where the second end (7) of the connection sleeve is mounted to project out from the outer side of the pipe while the connection sleeve is secured to the branch pipe by a strapping band disposed between the second end (7) of the connection sleeve and the main pipe.

5. Use of a connection sleeve according to any of claims 1 - 4 for sealing the connection between an inlet pipe and a hole in a cylindrical concrete wall, the thickness of the concrete wall being at least as great as the length of the sleeve, where the second end (7) of the connection sleeve is mounted to project out from the outer side of the cylindrical wall while the connection sleeve is secured to the inlet pipe by a strapping band disposed between the second end (7) of the connection sleeve and the cylindrical wall.

## Patentansprüche

1. Verbindungshülse für einen Rohrabzweig, umfassend einen im Wesentlichen rohrförmigen Körper (1) mit einer Innenseite und einer Außenseite, wobei ein erstes Ende der Hülse zum Einführen in ein Loch in einer Wand ausgestaltet ist und wobei das zweite Ende der Hülse zum Anordnen an der Oberfläche des Loches ausgestaltet ist und wobei die Außenseite des ersten Endes (5) der Hülse mit einem ringförmigen Vorsprung versehen ist, welcher als ringförmige Lippe (3) ausgebildet ist, welche weitgehend konstante Dicke aufweist und schräg in Richtung des zweiten Endes (7) der Hülse vorsteht, und wobei die Innenseite an dem ersten Ende der Hülse mit einer ringförmigen Verminderung des Innendurchmessers versehen ist, wobei die ringförmige Verminderung (9) des Innendurchmessers als nach innen gerichtete Abschrägung ausgestaltet ist, welche von einem weitgehend zylindrischen Teil der Innenseite ausgeht und sich zu einem kleineren Durchmesser an der Kante des ersten Endes (5) der Hülse verschmälert.

2. Verbindungshülse gemäß Anspruch 1, wobei die nach innen gerichtete Abschrägung (9) am innersten Teil eine Querschnittsform als eine sich verjüngende Lippe aufweist.

3. Verbindungshülse gemäß Anspruch 1 oder 2, wobei die Außenseite der Hülse mit einem ringförmigen Flansch (11) an dem zweiten Ende (7) versehen ist, wobei der Flansch von der rohrförmigen Außenseite weitgehend senkrecht nach außen vorsteht und wobei die Außenseite der Hülse mit einer ringförmigen Erhebung (15) versehen ist, welche in einem Abstand von x von dem Flansch angeordnet ist, wobei 2 ≤ x ≤ 40 mm, bevorzugt 10 ≤ x ≤ 30 mm oder besonders bevorzugt 12 ≤ x ≤ 18 mm ist.

4. Verwendung einer Verbindungshülse gemäß Anspruch 1 zum Abdichten der Verbindung zwischen einem Abzweigrohr und einem seitlichen Loch in einem doppelwandigen Hauptrohr aus gewelltem Kunststoff, wobei das zweite Ende (7) der Verbindungshülse derart angebracht ist, dass es von der Außenseite des Rohrs nach außen vorsteht, während die Verbindungshülse mit einem Umreifungsband, welches zwischen dem zweiten Ende (7) der Verbindungshülse und dem Hauptrohr angeordnet ist, an dem Abzweigrohr befestigt ist.

5. Verwendung einer Verbindungshülse gemäß einem der Ansprüche 1 - 4 zum Abdichten der Verbindung zwischen einem Einlassrohr und einem Loch in einer zylindrischen Betonwand, wobei die Dicke der Betonwand mindestens so groß ist wie die Länge der Hülse, wobei das zweite Ende (7) der Verbindungshülse derart angebracht ist, dass es von der Außenseite der zylindrischen Wand nach außen vorsteht, während die Verbindungshülse mit einem Umreifungsband, welches zwischen dem zweiten Ende (7) der Verbindungshülse und der zylindrischen Wand angeordnet ist, an dem Einlassrohr befestigt ist.

## Revendications

1. Un manchon de raccordement pour un embranchement de tuyau, comprenant un corps tubulaire substantiellement (1) avec un côté intérieur et un côté extérieur, où une première extrémité du manchon est désignée pour insertion dans un trou dans une paroi et où une seconde extrémité du manchon est désignée pour disposition à la surface du trou, et où le côté extérieur de la première extrémité (5) du manchon est muni d'une saillie annulaire formée comme une lèvre annulaire (3) ayant largement une épaisseur constante et faisant saillie de manière oblique vers la seconde extrémité (7) du manchon et où le côté intérieur à la première extrémité du manchon est muni d'une réduction annulaire du diamètre intérieur, où la réduction annulaire (9) du diamètre intérieur est désignée comme un biseautage vers l'intérieur qui est provient d'une partie largement cylindrique du côté intérieur et diminue vers un diamètre inférieur au bord de la première extrémité (5) du manchon.

2. Un manchon de raccordement selon la revendication 1, où le biseautage vers l'intérieur (9) sur la partie la plus à l'intérieur a une section transversale comme une lèvre conique.

3. Un manchon de raccordement selon la revendication 1 ou 2, où le côté extérieur du manchon est muni d'une bride annulaire (11) à la seconde extrémité (7), la bride faisant saillie largement perpendiculairement en dehors du côté extérieur tubulaire, et où le côté extérieur du manchon est muni d'un bourrelet (15) qui est disposé à une distance de x où 2≤x≤40 mm, de préférence 10≤x≤30 mm ou encore davantage préféré 12<x<18 mm de la bride.

4. Utilisation d'un manchon de raccordement selon la revendication 1 pour étanchéifier le raccordement entre un embranchement de tuyau et un trou latéral dans un tuyau principal à double paroi de plastique cannelé où la seconde extrémité (7) du manchon de raccordement est montée pour faire saillie en dehors du côté extérieur du tuyau tandis que le manchon de raccordement est fixé à l'embranchement de tuyau par une bande de cerclage disposée entre la seconde extrémité (7) du manchon de raccordement et le tuyau principal.

5. Utilisation d'un manchon de raccordement selon l'une quelconque des revendications 1-4 pour étanchéifier le raccordement entre un tuyau d'admission et un trou dans une paroi en béton cylindrique, l'épaisseur de la paroi en béton étant au moins aussi grande que la longueur du manchon, où la seconde extrémité (7) du manchon de raccordement est montée pour faire saillie en dehors du côté extérieur de la paroi cylindrique tandis que le manchon de raccordement est fixé au tuyau d'admission par une bande de cerclage disposée entre la seconde extrémité (7) du manchon de raccordement et la paroi cylindrique.
